# EUROPÄISCHE PATENTANMELDUNG

(11) **EP 2 157 642 A2**
(43) Veröffentlichungstag der Anmeldung: **24.02.2010**
(21) Anmeldenummer: 09166611.5
(22) Anmeldetag: 28.07.2009
(51) Int. Cl.: H01M 4/82, H01M 4/73, H01M 10/18

(54) **Verfahren zur Herstellung einer Bipolarzelle und Bipolarzelle für eine bipolare Batterie**

(30) Priorität: 29.07.2008 DE 102008036318
(71) Anmelder: ElringKlinger AG, 72581 Dettingen (DE)
(72) Erfinder: Schlipf, Michael, DE/84508 Burgkirchen (DE); Zahn, Helmut, 89520, Heidenheim (DE)
(74) Vertreter: Boehme, Ulrich

(57) **Zusammenfassung**

Um ein Verfahren zur Herstellung einer Bipolarzelle für eine bipolare Batterie zu schaffen, welches auch in der Großserie zuverlässig und einfach durchführbar ist und eine zuverlässige Verbindung zwischen dem Gitter und der Bipolarplatte der Bipolarzelle erzeugt, wird ein Verfahren zur Herstellung einer Bipolarzelle für eine bipolare Batterie vorgeschlagen, welches folgende Verfahrensschritte umfasst:
- Bereitstellen einer Bipolarplatte;
- Bereitstellen mindestens eines Gitters;
- Laminieren des mindestens einen Gitters und der Bipolarplatte oder Aufbringen des mindestens einen Gitters auf die Bipolarplatte durch ein Spritzgießverfahren oder durch Transfer-Moulding.

## Beschreibung

Die vorliegende Erfindung betrifft ein Verfahren zur Herstellung einer Bipolarzelle für eine bipolare Batterie.

Herkömmliche Bleisäurebatterien werden aus monopolaren Platten aufgebaut. Mit diesen Systemen werden Leistungsdichten von maximal 250 W/kg erreicht.

Für viele Anwendungen (beispielsweise in Hybrid-Elektrofahrzeugen) werden jedoch höhere Leistungsdichten (von mehr als 600 W/kg) gefordert. Diese höheren Leistungsdichten sind nur durch einen bipolaren Batterieaufbau realisierbar.

Eine Bleisäurebatterie mit einem solchen bipolaren Batterieaufbau ist beispielsweise in der WO 98/40920 offenbart.

Wesentlicher Bestandteil einer solchen bipolaren Batterie sind Bipolarplatten, welche elektrisch leitfähig sind und aufeinanderfolgende permeable Separatoren, die mit Elektrolyt gefüllt sind, voneinander trennen.

Für Aufbau und Herstellung solcher Bipolarplatten sind die folgenden Möglichkeiten aus dem Stand der Technik bekannt:
- Die Bipolarplatte kann ein Substrat aus einem Metall, beispielsweise Titan oder Eisen mit einer Nickelbeschichtung, oder aus einer Metalllegierung umfassen.
- Alternativ hierzu kann das Substrat der Bipolarplatte auch aus einer elektrisch leitfähigen Keramik, beispielsweise Ti4O9, bestehen.
- Ferner kann das Substrat der Bipolarplatte aus einem mit graphitierten Kohlefasern verstärkten Polymer bestehen. Dieser Verbund wird durch Lösen des Polymers, Eingießen des Polymers in die graphitierte Kohlefasermatte und anschließendes Verpressen der getränkten Kohlefasermatten hergestellt. Auf diesen Polymerverbund wird dann durch elektrolytische Abscheidung beidseitig eine elektrisch leitfähige, metallhaltige Schicht, beispielsweise eine Bleischicht, aufgebracht.

Bei diesem Herstellungsverfahren für die Bipolarplatte muss jedoch auf lösliche Polymere zurückgegriffen werden, wodurch die Auswahl an geeigneten Kandidaten sehr eingeschränkt ist.

Ferner weisen lösliche Polymere häufig nur eine eingeschränkte chemische Beständigkeit auf.

Das Herstellverfahren unter Verwendung löslicher Polymere ist aufgrund des Zwangs zur Verwendung von geeigneten Lösemitteln aus Gründen des Personen- und Umweltschutzes bedenklich.

Ferner hat es sich als unmöglich erwiesen, auf dem Polymerverbund aus polymerbefüllten Kohlefasermatten durch ein elektrolytisches Abscheideverfahren eine vollständig porenfreie Pb-Schicht zu erzeugen. Die nach einem solchen Verfahren hergestellte Pb-Schicht zeigt aufgrund des Vorhandenseins von Poren im Betrieb der Bipolarplatte in der Bleisäurebatterie, insbesondere auf der Anodenseite, eine starke Neigung zur Korrosion und/oder zum Lochfraß.

Da elektrolytische Abscheideverfahren auf der Basis von Nernst-Potentialen entsprechend der elektrochemischen Spannungsreihe ablaufen, ist eine gezielte Legierung der Pb-Schicht nach Art und Gehalt mit weiteren Metallen nur eingeschränkt oder gar nicht möglich. Ferner weisen elektrolytisch abgeschiedene Bleischichten typischerweise eine sehr rauhe Oberfläche auf.

Eine Bipolarplatte wird üblicherweise mit einem negativen Gitter, das mit negativer Paste befüllt ist, und mit einem positiven Gitter, das mit positiver Paste befüllt ist, verbunden, um eine Bipolarzelle für eine bipolare Batterie zu bilden.

Gemäß der WO 98/40920 A2 erfolgt eine solche Verbindung, indem die mit den Pasten befüllten Gitter mit der Bipolarplatte in Kontakt gebracht werden, bevor die Pasten ausgehärtet sind, wobei sich die Pasten während des anschließenden Aushärtungsvorgangs chemisch mit der Bipolarplatte verbinden. Die aus metallischem Material bestehenden Gitter werden gemäß der WO 98/40920 A2 also nicht selbst mit der Bipolarplatte verbunden, sondern nur mittelbar über die Pasten.

Der vorliegenden Erfindung liegt die Aufgabe zugrunde, ein Verfahren zur Herstellung einer Bipolarzelle für eine bipolare Batterie zu schaffen, welches auch in der Großserie zuverlässig und einfach durchführbar ist und eine zuverlässige Verbindung zwischen dem Gitter und der Bipolarplatte der Bipolarzelle erzeugt.

Diese Aufgabe wird erfindungsgemäß durch ein Verfahren zur Herstellung einer Bipolarzelle für eine bipolare Platte gelöst, das folgende Verfahrensschritte umfasst:
- Bereitstellen einer Bipolarplatte;
- Bereitstellen mindestens eines Gitters;
- Laminieren des mindestens einen Gitters und der Bipolarplatte oder Aufbringen des mindestens einen Gitters auf die Bipolarplatte durch ein Spritzgießverfahren oder durch Transfer-Moulding.
   Bei einer Alternative des erfindungsgemäßen Verfahrens wird somit das mindestens eine Gitter direkt durch Lamination mit der Bipolarplatte verbunden, so dass ein inniger Verbund zwischen dem Gitter selbst und der Bipolarplatte hergestellt wird.

Bei einer anderen Alternative des erfindungsgemäßen Verfahrens wird das mindestens eine Gitter durch ein Spritzgießverfahren oder durch Transfer-Moulding, vorzugsweise direkt aus der Schmelze, auf die Bipolarplatte aufgebracht.

Bei einer bevorzugten Ausgestaltung der ersten Alternative der Erfindung ist vorgesehen, dass zwei Gitter, insbesondere ein Gitter auf der Positivseite (im Folgenden als "positives Gitter" bezeichnet) und ein Gitter auf der Negativseite (im Folgenden als "negatives Gitter" bezeichnet), bereitgestellt und mit einander gegenüberliegenden Seiten der Bipolarplatte laminiert werden.

Besonders günstig ist es dabei, wenn die beiden Gitter gleichzeitig mit den einander gegenüberliegenden Seiten der Bipolarplatte laminiert werden.

Bei einer besonderen Ausgestaltung der Erfindung ist vorgesehen, dass mindestens ein Gitter durch zerspanende Bearbeitung einer Folie hergestellt wird.

Eine solche Folie kann insbesondere durch Abschälen von einem Block eines Ausgangsmaterials hergestellt werden.

Als besonders günstig hat es sich erwiesen, wenn der Block, aus dem die Folie durch Abschälen hergestellt wird, durch ein Heißpressverfahren ("Hot-Compression-Moulding"-Verfahren) aus einem thermoplasthaltigen Material hergestellt wird.

Das mindestens eine Gitter der Bipolarplatte muss keine elektrische Leitfähigkeit aufweisen.

Vorzugsweise ist vorgesehen, dass das mindestens eine Gitter der Bipolarplatte kein metallisches Material enthält.

Günstig ist es, wenn mindestens ein Gitter verwendet wird, das ein Thermoplast-Material enthält, insbesondere Polypropylen (PP) und/oder Polycarbonat (PC).

Insbesondere kann vorgesehen sein, dass mindestens ein Gitter ein Thermoplast-Compound enthält, das seinerseits mindestens ein Thermoplast-Material und mindestens einen Füllstoff enthält.

Dabei kann das Thermoplast-Material insbesondere ein Fluorthermoplast-Material enthalten.

Insbesondere kann vorgesehen sein, dass das Thermoplast-Material vollständig aus einem oder mehreren Fluorthermoplast-Materialien besteht.

Geeignete Fluorthermoplast-Materialien sind insbesondere PFA (Perfluoralkoxy-Copolymer), MFA (Tetrafluorethylen-Perfluormethylvinylether), FEP (Fluorethylenpropylen), ETFE (Ethylentetrafluorethylen), ECTFE (Ethylen-Chlortrifluorethylen), HTE (Terpolymer, hergestellt aus den Monomeren Hexafluorpropylen, Tetrafluorethylen und Ethylen), THV (Tetrafluorethylen-Hexafluorpropylen-Vinyliden-Fluorid), PVDF (Polyvinylidenfluorid) und/oder PFV (Polyvinylfluorid).

Alternativ oder ergänzend hierzu kann als Fluorthermoplast-Material auch ein schmelzverarbeitbares Tetrafluorethylen-Copolymer verwendet werden; solche schmelzverarbeitbaren Tetrafluorethylen-Copolymere sind insbesondere in der WO 00/08071 A2 und in der WO 01/60911 A1 beschrieben, auf welche insoweit ausdrücklich Bezug genommen und welche insoweit zum Bestandteil dieser Beschreibung gemacht werden.

Ferner kann vorgesehen sein, dass das Thermoplast-Material einen nicht-fluorierten thermoplastischen Werkstoff, insbesondere Polyproyplen (PP) und/oder Polycarbonat, enthält und vorzugsweise vollständig aus einem oder mehreren nicht-fluorierten thermoplastischen Werkstoffen, insbesondere Polypropylen und/oder Polycarbonat, besteht.

Zur Erhöhung der mechanischen Stabilität des Gitters kann insbesondere vorgesehen sein, dass mindestens ein Gitter als Füllstoff Glasfasern enthält.

Der Laminiervorgang erfolgt vorzugsweise in einer beheizten Laminatpresse.

Um trotz der im Gitter vorhandenen Durchtrittsöffnungen einen hohen Anpressdruck auf das an der Bipolarplatte anliegende Gitter erzeugen zu können, ohne dass das Gitter sich verformt oder seitlich ausweicht, ist es günstig, wenn beim Laminieren mindestens ein Gitter in einer komplementär zu dem Gitter ausgebildeten Negativform aufgenommen ist.

Werden zwei Gitter gleichzeitig mit der Bipolarplatte laminiert, so ist es günstig, wenn beim Laminieren zwei auf einander entgegengesetzten Seiten der Bipolarplatte angeordnete Gitter in jeweils einer komplementär zu dem jeweiligen Gitter ausgebildeten Negativform aufgenommen sind.

Das Laminieren kann grundsätzlich unter einem während des Laminiervorgangs variablen oder unter einem während des Laminiervorgangs im Wesentlichen konstanten Anpressdruck durchgeführt werden.

Für das erfindungsgemäße Verfahren wird vorzugsweise eine Bipolarplatte verwendet, die mindestens ein Substrat und mindestens eine metallhaltige Folie umfasst, die bereits vor dem Laminieren des mindestens einen Gitters und der Bipolarplatte miteinander laminiert werden.

Durch das Laminieren mit einer metallhaltigen Folie erhält das Substrat der Bipolarplatte eine metallische Schicht mit einer besonders hohen elektrochemischen Beständigkeit.

Außerdem weist die auflaminierte metallhaltige Folie eine deutlich geringere Rauhigkeit der Oberfläche auf als eine nach einem elektrolytischen Abscheideverfahren erzeugte metallische Schicht. Ferner weist die auflaminierte Folie im Gegensatz zu einer nach dem elektrolytischen Abscheideverfahren erzeugten metallischen Schicht keine Poren auf.

Die metallhaltige Folie ist vorzugsweise überwiegend oder vollständig aus metallischem Material, vorzugsweise aus Blei oder einer Bleilegierung, gebildet.

Bei einer besonderen Ausgestaltung des erfindungsgemäßen Verfahrens kann vorgesehen sein, dass das Substrat der Bipolarplatte beidseitig mit jeweils einer metallhaltigen Folie laminiert wird.

Alternativ zur Verwendung einer bereits aus einem Substrat und mindestens einer metallhaltigen Folie laminierten Bipolarplatte kann auch vorgesehen sein, dass mindestens ein Substrat der Bipolarplatte, mindestens eine metallhaltige Folie und mindestens ein Gitter gleichzeitig miteinander laminiert werden.

Das Laminieren des mindestens einen Gitters und der Bipolarplatte erfolgt vorzugsweise zumindest zeitweise bei einer Temperatur von mindestens ungefähr 100°C, vorzugsweise bei einer Temperatur von mindestens ungefähr 200°C.

Ferner erfolgt das Laminieren des mindestens einen Gitters und der Bipolarplatte vorzugsweise zumindest zeitweise unter einem Druck von mindestens ungefähr 15 N/cm², vorzugsweise von mindestens ungefähr 30 N/cm².

Die vorliegende Erfindung betrifft ferner eine Bipolarzelle für eine bipolare Batterie.

Der Erfindung liegt die weitere Aufgabe zugrunde, eine Bipolarzelle für eine bipolare Batterie zu schaffen, die auch in der Großserie zuverlässig und einfach herstellbar ist und bei der mindestens ein Gitter zuverlässig mit einer Bipolarplatte verbunden ist.

Diese Aufgabe wird erfindungsgemäß durch eine Bipolarzelle für eine bipolare Batterie gelöst, welche eine Bipolarplatte und mindestens ein Gitter, das mit der Bipolarplatte laminiert ist oder durch ein Spritzgießverfahren oder Transfer-Moulding, vorzugsweise direkt aus der Schmelze, auf die Bipolarplatte aufgebracht ist, umfasst.

Diese Bipolarzelle wird vorzugsweise durch ein Verfahren nach einem der Ansprüche 1 bis 14 hergestellt.

Das mindestens eine Gitter der erfindungsgemäß hergestellten Bipolarzelle wird vorzugsweise erst nach dem Laminiervorgang mit negativer Paste bzw. positiver Paste befüllt.

Die erfindungsgemäß hergestellte Bipolarzelle eignet sich insbesondere zur Verwendung in einer bipolaren Bleisäurebatterie.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine in Längsrichtung geschnittene schematische Explosionsdarstellung einer Bipolar-Bleisäurebatterie mit einer negativen Endplatte, einer positiven Endplatte und einer Bipolarplatte, welche zusammen zwei 2-Volt-Einheiten bilden;
- Fig. 2: einen schematischen Längsschnitt durch eine Bipolar-Bleisäurebatterie mit einer negativen Endplatte, einer positiven Endplatte und zwei Bipolarplatten, welche zusammen drei 2-Volt-Einheiten bilden;
- Fig. 3: eine vergrößerte Darstellung des Bereichs I aus Fig. 2;
- Fig. 4: eine schematische Draufsicht auf ein Gitter einer Bipolarzelle einer Bipolar-Bleisäurebatterie;
- Fig. 5: einen schematischen Längsschnitt durch das Gitter aus Fig. 4, längs der Linie 5-5 in Fig. 4;
- Fig. 6: eine schematische Draufsicht auf einen Abstandshalter (Spacer) einer 2-Volt-Einheit einer Bipolar-Bleisäurebatterie;
- Fig. 7: einen schematischen Längsschnitt durch den Abstandshalter (Spacer) aus Fig. 6, längs der Linie 7-7 in Fig. 6;
- Fig. 8: eine schematische Darstellung einer Verpressung eines Thermoplast-Compounds zu einem hohlzylindrischen Formkörper, vor einer Erwärmung des Formkörpers;
- Fig. 9: eine schematische Darstellung einer Erwärmung des Thermoplast-Compound-Formkörpers aus Fig. 8 in einem Sinterofen;
- Fig. 10: eine schematische Darstellung einer weiteren Verpressung des Thermoplast-Compound-Formkörpers aus den Fig. 8 und 9 nach der Entnahme aus dem Sinterofen;
- Fig. 11: eine schematische Darstellung eines Laminiervorgangs zur Herstellung einer Bipolarplatte aus einem Kohlenstofffaser-Vlies, zwei Thermoplast-Compound-Folien und zwei Blei/Zinn-Folien; und
- Fig. 12: eine schematische Darstellung eines Laminiervorgangs zur Herstellung einer Bipolarzelle aus einer Bipolarplatte sowie einem positiven Gitter und einem negativen Gitter.

Gleiche oder funktional äquivalente Elemente sind in allen Figuren mit denselben Bezugszeichen bezeichnet.

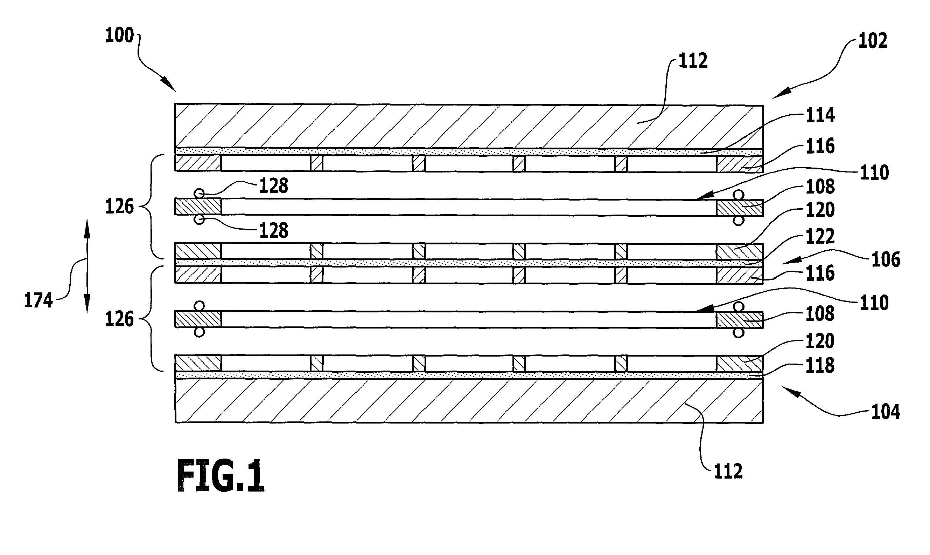

Eine in Fig. 1 schematisch dargestellte, als Ganzes mit 100 bezeichnete Bipolar-Bleisäurebatterie umfasst eine negative Endzelle 102, eine positive Endzelle 104, eine zwischen der negativen Endzelle 102 und der positiven Endzelle 104 angeordnete Bipolarzelle 106 sowie zwei jeweils zwischen der Bipolarzelle 106 und der negativen Endzelle 102 bzw. der positiven Endzelle 104 angeordnete Abstandshalter (im Englischen als "spacer" bezeichnet) 108.

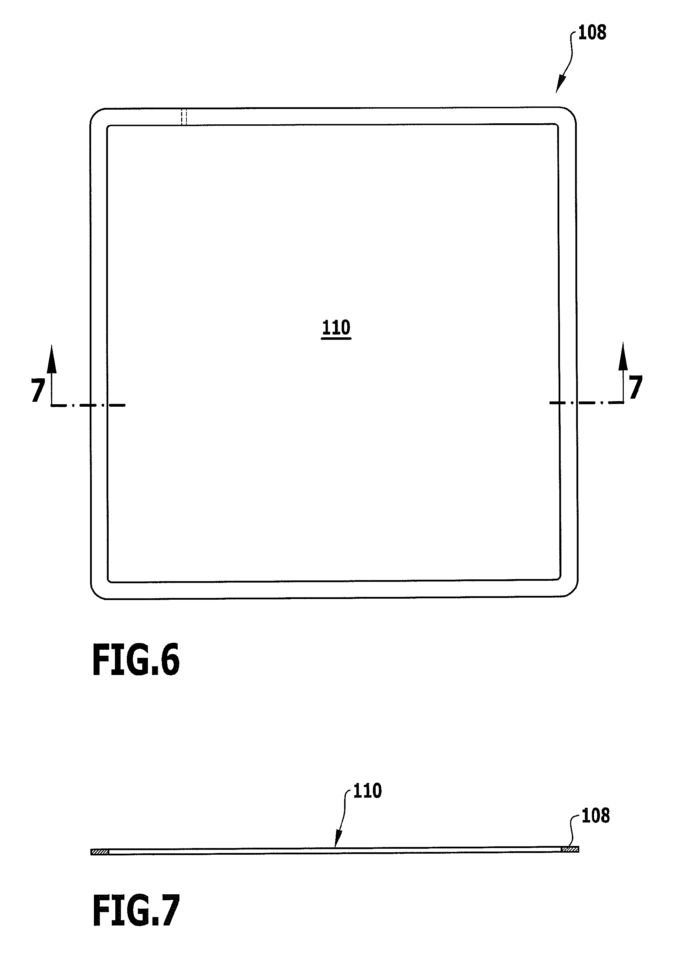

Jeder der Abstandshalter 108 ist im Wesentlichen rechteckig und rahmenförmig ausgebildet (siehe Fig. 6 und 7) und umgibt eine im Wesentlichen rechteckige, mittige Durchtrittsöffnung 110, in welcher im Betriebszustand der Bipolar-Bleisäurebatterie 100 jeweils ein Separator in Form einer (in den Figuren nicht dargestellten) Glasfasermatte aufgenommen ist, welche mit einem Elektrolyten, beispielsweise mit Schwefelsäure, getränkt ist.

Die negative Endzelle 102 umfasst eine außenseitig angeordnete Endplatte 112 (beispielsweise aus Aluminium), eine negative Platte 114 und ein negatives Gitter (im Englischen "grid" genannt) 116, welches dem Abstandshalter 108 und der Bipolarzelle 106 zugewandt ist.

Die positive Endzelle 104 umfasst eine außenseitig angeordnete Endplatte 112 (beispielsweise aus Aluminium), eine positive Platte 118 und ein positives Gitter (im Englischen "grid" genannt) 120, welches dem Abstandshalter 108 und der Bipolarzelle 106 zugewandt ist.

Die Bipolarzelle 106 umfasst eine mittig angeordnete Bipolarplatte 122, ein der negativen Endzelle 102 zugewandtes positives Gitter 120 und ein der positiven Endzelle 104 zugewandtes negatives Gitter 116.

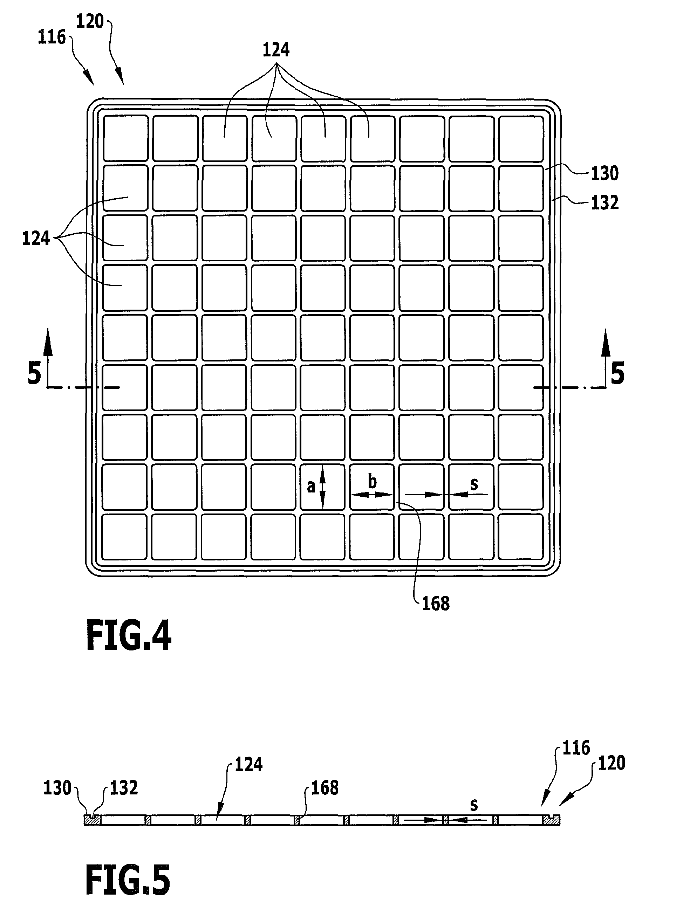

Wie aus Fig. 4 zu ersehen ist, welche schematisch ein negatives Gitter (Gitter für die Negativseite) 116 oder ein im Wesentlichen dieselbe Form aufweisendes positives Gitter (Gitter für die Positivseite) 118 zeigt, ist jedes dieser Gitter mit einer Vielzahl von ungefähr quadratischen Durchtrittsöffnungen 124 versehen, welche im Betrieb der Bipolar-Bleisäurebatterie 100 mit einer negativen bzw. einer positiven Paste gefüllt sind.

Die negative Paste, mit welcher das negative Gitter 116 befüllt ist, enthält insbesondere Blei.

Die positive Paste, mit welcher das positive Gitter 120 befüllt ist, enthält insbesondere Bleioxid.

Jeweils ein mit negativer Paste befülltes negatives Gitter 116, ein Abstandshalter 108 mit dem darin aufgenommenen Separator in Form einer elektrolytgetränkten Glasfasermatte und ein mit positiver Paste befülltes positives Gitter 120 bilden zusammen eine elektrochemische 2-Volt-Zelle 126.

Die in Fig. 1 dargestellte Bipolar-Bleisäurebatterie 100 umfasst somit zwei elektrochemische 2-Volt-Zellen und weist somit eine Nennspannung von insgesamt 4 Volt auf.

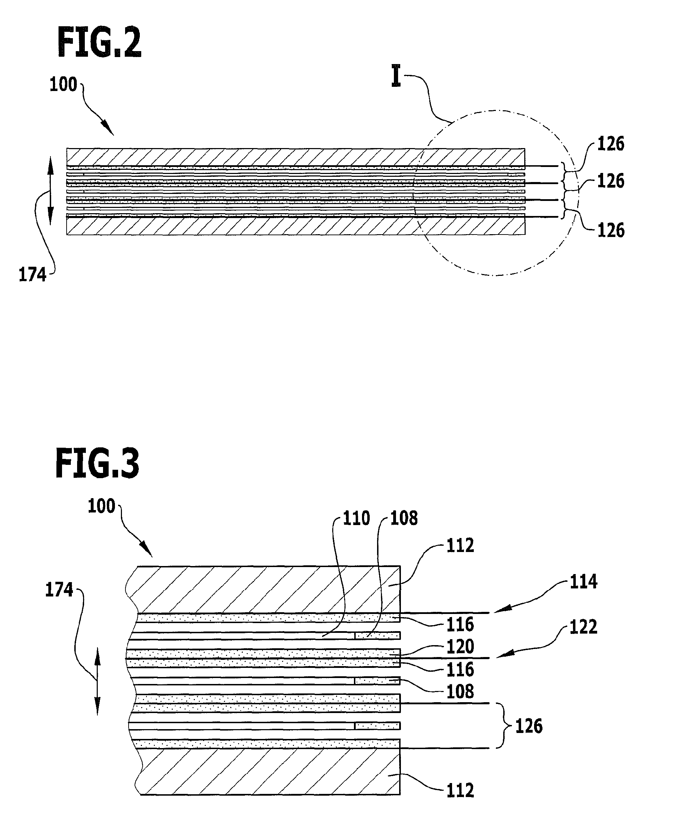

Im Gegensatz hierzu umfasst die in den Fig. 2 und 3 dargestellte alternative Ausführungsform einer Bipolar-Bleisäurebatterie 100 drei elektrochemische 2-Volt-Zellen 126 und weist somit eine Nennspannung von insgesamt 6 Volt auf.

Für jede zusätzliche elektrochemische 2-Volt-Zelle 126 wird der Bipolar-Bleisäurebatterie 100 eine zusätzliche Bipolarzelle 106 und ein zusätzlicher Abstandshalter 108 mit Separator zwischen der negativen Endzelle 102 und der positiven Endzelle 104 hinzugefügt.

Wie aus Fig. 1 zu ersehen ist, ist zur Abdichtung des Elektrolytraums zwischen jedem Abstandshalter 108 und dem jeweils benachbarten negativen Gitter 116 oder positiven Gitter 120 jeweils ein ringförmig umlaufendes Dichtelement 128 vorgesehen.

Jedes dieser Dichtelemente 128 kann beispielsweise aus einem Fluorelastomer, insbesondere aus Viton, gebildet sein.

Zur Aufnahme eines solchen Dichtelements 128 weist jedes negative Gitter 116 und jedes positive Gitter 120 auf seiner dem jeweils benachbarten Abstandshalter 108 zugewandten Stirnseite 130 eine ringförmig um die Durchtrittsöffnungen 124 des jeweiligen Gitters umlaufende Ringnut 132 auf (siehe die Fig. 4 und 5).

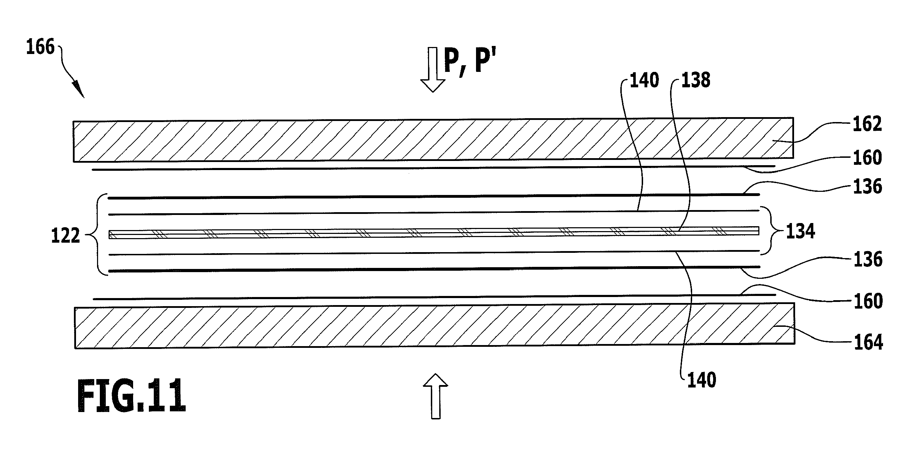

Jede Bipolarplatte 122 umfasst ein Substrat 134, welches beidseits mit jeweils einer metallhaltigen Folie 136 laminiert ist (siehe Fig. 11).

Das Substrat 134 der Bipolarplatte 122 kann, wie in Fig. 11 schematisch dargestellt, ein mittig angeordnetes Kohlenstofffaser-Vlies 138 und zwei beidseitig auf das Kohlenstofffaser-Vlies 138 auflaminierte elektrisch leitfähige Thermoplast-Compound-Folien 140 umfassen.

Alternativ hierzu kann das Substrat 134 auch aus einer einzigen, elektrisch leitfähigen Thermoplast-Compound-Folie 140 gebildet sein.

Zur Herstellung der elektrisch leitfähigen Thermoplast-Compound-Folie 140 wird wie folgt vorgegangen:
Ein Pulver eines Thermoplast-Materials mit einer mittleren Partikelgröße von beispielsweise ungefähr 5 µm bis ungefähr 500 µm wird mit einem elektrisch leitfähigen Füllstoff, beispielsweise einem Leitpigment in Form von Ruß ("carbon black"), mit einer mittleren Primärteilchengröße von beispielsweise ungefähr 1 nm bis ungefähr 100 nm im Trockenverfahren gemischt, um ein Thermoplast-Compound zu erhalten.

Dabei beträgt der Anteil des elektrisch leitfähigen Füllstoffs an dem Thermoplast-Compound vorzugsweise ungefähr 5 Gewichtsprozent bis ungefähr 30 Gewichtsprozent.

Anstelle von Ruß kann beispielsweise auch Kohlenstoff-Grieß aus Elektrographit verwendet werden, beispielsweise Kohlenstoff-Grieß mit der Bezeichnung EG 31, der von der Firma SGL Carbon AG, Wiesbaden, Deutschland, vertrieben wird.

Als Thermoplast-Material wird vorzugsweise ein Fluorthermoplast-Material verwendet.

Geeignete Fluorthermoplast-Materialien sind beispielsweise PFA (Perfluoralkoxy-Copolymer), MFA (Tetrafluorethylen-Perfluormethylvinylether), FEP (Fluorethylenpropylen), ETFE (Ethylentetrafluorethylen), ECTFE (Ethylen-Chlortrifluorethylen), HTE (Terpolymer, hergestellt aus den Monomeren Hexafluorpropylen, Tetrafluorethylen und Ethylen), THV (Tetrafluorethylen-Hexafluorpropylen-Vinyliden-Fluorid), PVDF (Polyvinylidenfluorid) und/oder PFV (Polyvinylfluorid).

Alternativ oder ergänzend hierzu kann als Fluorthermoplast-Material auch ein schmelzverarbeitbares Tetrafluorethylen-Copolymer verwendet werden; solche schmelzverarbeitbaren Tetrafluorethylen-Copolymere sind insbesondere in der WO 00/08071 A2 und in der WO 01/60911 A1 beschrieben.

Anstelle der genannten Fluorthermoplast-Materialien können auch nicht-fluorierte Thermoplaste, beispielsweise Polypropylen, eingesetzt werden.

Das Thermoplast-Material und der elektrisch leitfähige Füllstoff werden in einem Heißpressverfahren ("Hot-Compression-Moulding"-Verfahren) zu einem festen Verbund zwischen einer Polymermatrix und dem Füllstoff verschmolzen.

Insbesondere kann aus dem durch Vermischen des Thermoplast-Materials und des elektrisch leitfähigen Füllstoffs hergestellten Thermoplast-Compound durch das Heißpressverfahren ein Block gefertigt werden, aus dem dann durch Abschälen Folien aus dem Thermoplast-Compound hergestellt werden.

Der Block aus dem Thermoplast-Compound kann insbesondere in Form eines Hohlzylinders gefertigt werden.

Typische Stärken der durch Abschälen aus dem Block hergestellten Folien betragen von ungefähr 0,05 mm bis ungefähr 0,5 mm.

Alternativ hierzu kann eine Folie aus dem Thermoplast-Compound auch nach dem Schmelzextrusionsverfahren hergestellt werden.

Für die Herstellung der Mischung aus einem Thermoplast-Material und einem elektrisch leitfähigen Füllstoff werden ein Pulver des Thermoplast-Materials und ein Pulver des elektrisch leitfähigen Füllstoffs in einen handelsüblichen Taumelmischer eingebracht und durch Drehen des Mischgefäßes über einen Zeitraum von mindestens einer Stunde mit einer Drehgeschwindigkeit im Bereich von ungefähr 60 U/min bis ungefähr 120 U/min durchmischt, wobei vorzugsweise jede Minute die Drehrichtung gewechselt wird.

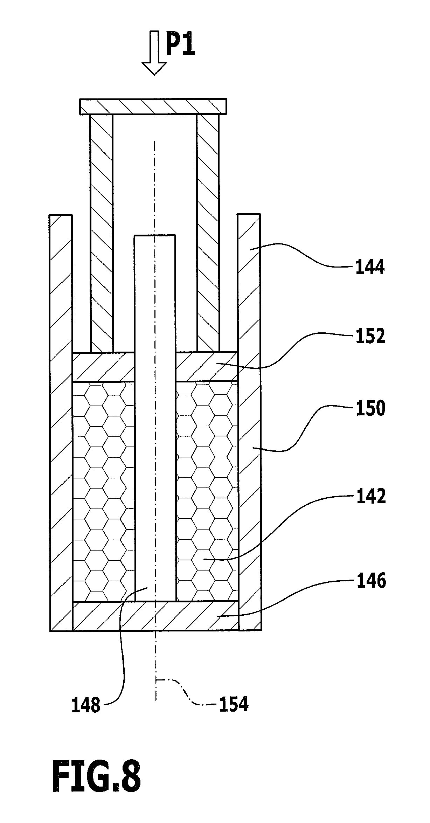

Das durch diese Durchmischung aus den Komponenten hergestellte Thermoplast-Compound 142 wird in eine in Fig. 8 schematisch dargestellte, im Wesentlichen hohlzylindrische Pressform 144 eingebracht, welche an ihrem unteren Ende durch eine Stirnwand 146 verschlossen ist, die einen längs der Längsachse der Pressform 144 verlaufenden mittigen Dorn 148 trägt.

Zwischen dem Dorn 148 und der zylindrischen Außenwand 150 der Pressform 144 ist ein Pressstempel 152 längs der Längsachse 154 der Pressform 144 verschieblich geführt.

Mittels des Pressstempels 152 wird das pulverförmige Thermoplast-Compound 142 zunächst bei einem Stempeldruck P1 von mindestens ungefähr 30 bar über einen Zeitraum von mindestens ungefähr drei Minuten vorgepresst (siehe Fig. 8).

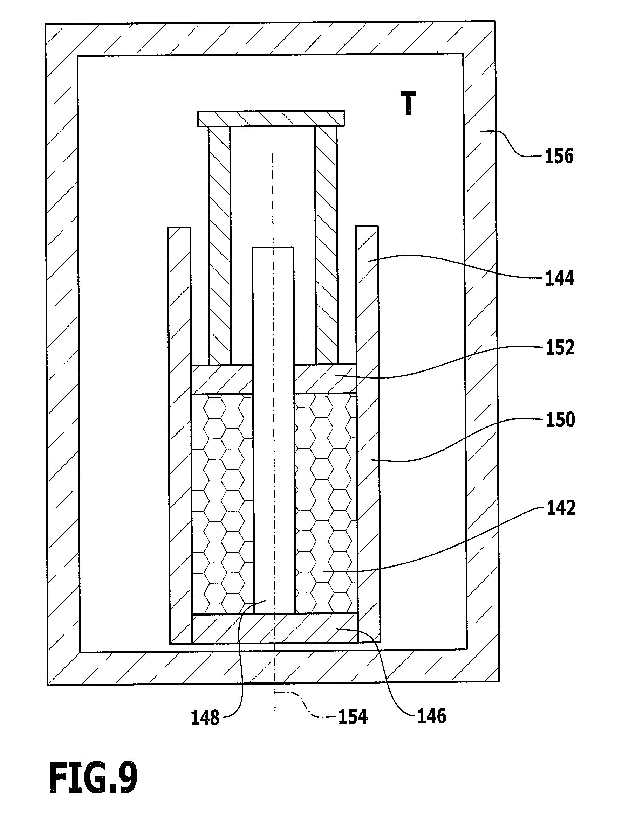

Danach wird die Pressform 144 mit der darin enthaltenen vorgepressten Mischung aus Thermoplast-Material und Füllstoff in einen in Fig. 9 schematisch dargestellten Sinterofen 156 überführt.

In dem Sinterofen 156 wird die Temperatur T während eines Zeitraums von beispielsweise ungefähr zwei Stunden auf eine Temperatur von mindestens ungefähr 250°C, vorzugsweise auf eine Temperatur oberhalb der Schmelztemperatur des im Thermoplast-Compound enthaltenen Thermoplast-Materials, erhöht und dann über einen Haltezeitraum von mindestens ungefähr weiteren 60 Stunden beibehalten.

Während der Verweildauer im Sinterofen 156 wird kein Druck auf die Polymermasse ausgeübt.

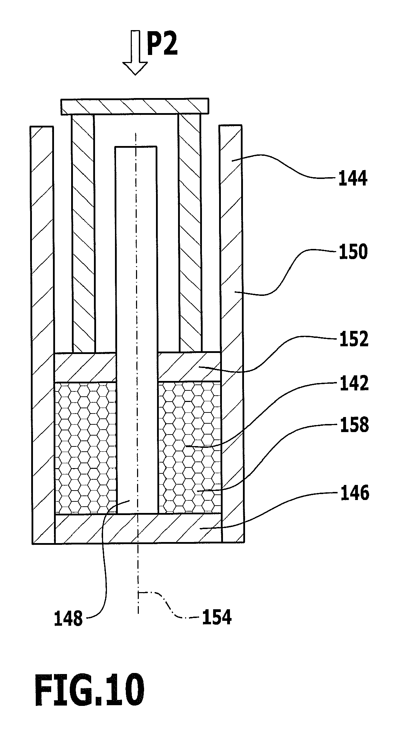

Nach dieser Wärmebehandlung wird die heiße Pressform 144 aus dem Sinterofen 156 entnommen und erneut in eine Presse überführt (siehe Fig. 10).

Unter Aufbringen eines konstanten Pressdrucks P2 von mindestens ungefähr 50 bar kühlt dann die Pressform 144 mit der Polymermasse innerhalb von beispielsweise ungefähr sechs Stunden auf eine Außentemperatur von höchstens ungefähr 80°C ab.

Nach dem vollständigen Erkalten wird das zu einem Verbund verschmolzene Thermoplast-Compound 142 aus der Pressform 144 herausgedrückt und so ein hohlzylindrischer Formkörper 158 erhalten.

Der hohlzylindrische Formkörper 158 wird auf einen profilierten Dorn aufgeschoben und in eine herkömmliche Schälmaschine, wie sie beispielsweise von der Firma KELLER HCW GmbH, Ibbenbühren-Laggenbeck, Deutschland, vertrieben wird, eingespannt.

Die für das Drehen des hohlzylindrischen Formkörpers 158 erforderliche Kraftübertragung erfolgt dabei mittels der Profilierung auf der Dornoberfläche vom sich drehenden Dorn auf den Formkörper 158.

Durch kontinuierliches Heranfahren eines Schälmessers an den sich drehenden Dorn mit dem drehfest an dem Dorn angeordneten hohlzylindrischen Formkörper 158 wird eine elektrisch leitfähige Thermoplast-Compound-Folie 140 vom Außenumfang des Formkörpers 158 abgeschält.

### Ausführungsbeispiel 1 für die Herstellung einer Folie aus ETFE mit einem Anteil von 20 Gewichtsprozent Ruß mittels Heißverpressung:

In einen handelsüblichen Taumelmischer, der mit einem 50 Liter fassenden Mischgefäß bestückt ist, wird folgendes eingebracht:
- 20 kg Fluon ETFE Z8820X, ein fein gemahlenes Pulver eines Fluorthermoplasten (Ethylentetrafluorethylen) mit einem Schmelzpunkt im Bereich von ungefähr 260°C bis ungefähr 280°C und einer typischen Partikelgrößenverteilung, die durch folgende Werte gekennzeichnet ist:
   x10 = 11 µm;
   x50 = 36 µm;
   x90 = 68 µm;
   wobei x10 den Partikeldurchmesser angibt, welcher von einem Anteil von 10 Gewichtsprozent der Partikel unterschritten wird; wobei x50 den Partikeldurchmesser angibt, welcher von einem Anteil von 50 Gewichtsprozent der Partikel unterschritten wird; und wobei x90 den Partikeldurchmesser angibt, der von einem Anteil von 90 Gewichtsprozent der Partikel unterschritten wird. Der Fluorthermoplast Fluon ETFE Z8820X wird beispielsweise von der Firma Asahi Glass Chemicals, Hillhouse, Großbritannien, vertrieben.
- 5 kg Printex L 6, ein amorpher Kohlenstoff-Ruß, der von der Firma EVONIK Industries AG, Essen, Deutschland, vertrieben wird.

Die Durchmischung der Komponenten ETFE und Ruß erfolgt durch Drehen des Mischgefäßes über einen Zeitraum von 90 Minuten mit einer unteren Drehgeschwindigkeit von 75 U/min und einer oberen Drehgeschwindigkeit von 90 U/min, wobei jede Minute die Drehrichtung gewechselt wird.

Das durch diese Durchmischung hergestellte Thermoplast-Compound wird in eine Pressform 144 mit den folgenden Abmessungen eingefüllt:
Innendurchmesser der zylindrischen Außenwand 150: 250 mm; Außendurchmesser des Dorns 148: 150 mm.

In diese Pressform 144 werden 30 kg der Mischung aus ETFE und 20 Gewichtsprozent Ruß eingebracht und zunächst mit einem Stempeldruck P1 von 38 bar über einen Zeitraum von 5 Minuten vorgepresst.

Danach wird die Pressform mit der darin enthaltenen vorgepressten Mischung aus ETFE und 20 Gewichtsprozent Ruß in einen Sinterofen 156 überführt. In dem Sinterofen 156 wird die Temperatur T während eines Zeitraums von zwei Stunden auf 290°C erhöht und dann über einen Zeitraum von weiteren 72 Stunden beibehalten. Während der Verweildauer im Sinterofen 156 wird kein Druck auf die Polymermasse ausgeübt.

Danach wird die heiße Pressform 144 aus dem Sinterofen 156 entnommen und erneut in eine Presse überführt. Unter Aufbringen eines konstanten Druckes P2 von 65 bar kühlt dann die Pressform 144 mit der Polymermasse innerhalb von 6 Stunden auf eine Außentemperatur von 60°C bis 70°C ab.

Nach dem vollständigen Erkalten wird die Polymermasse aus der Pressform 144 ausgedrückt und so ein hohlzylindrischer Formkörper 158 erhalten.

Der hohlzylindrische Formkörper 158 aus ETFE und 20 Gewichtsprozent Ruß wird auf einen profilierten Dorn aufgeschoben und in eine Schälmaschine der Firma KELLER eingespannt. Durch Drehen des profilierten Dorns und des drehfest damit verbundenen hohlzylindrischen Formkörpers 158 sowie kontinuierliches Heranfahren eines Schälmessers an den hohlzylindrischen Formkörper 158 wird eine Thermoplast-Compound-Folie 140 vom Außenumfang des hohlzylindrischen Formkörpers 158 abgeschält.

Dabei beträgt die Schälgeschwindigkeit für die Folienherstellung ungefähr 11 m/min.

Die Foliendicke für die Herstellung der Folie 140 aus ETFE und 20 Gewichtsprozent Ruß beträgt ungefähr 100 µm.

### (Ende des Ausführungsbeispiels 1)

Zur Herstellung einer Bipolarplatte 122 unter Verwendung der in der vorstehend erläuterten Weise hergestellten elektrisch leitfähigen Thermoplast-Compound-Folie 140 wird wie folgt vorgegangen:
In eine beheizbare Laminatpresse 166 wird der folgende Schichtaufbau eingebracht (siehe Fig. 11):
   - eine metallhaltige Folie 136;
   - eine elektrisch leitfähige Thermoplast-Compound-Folie 140;
   - ein Kohlenstofffaser-Vlies 138;
   - eine elektrisch leitfähige Thermoplast-Compound-Folie 140;
   - eine metallhaltige Folie 136.

Zum Schutz der metallhaltigen Folien 136 an den Außenseiten der herzustellenden Bipolarplatte 122 vor einer Beschädigung während des Laminierprozesses wird ferner jeweils eine Schutzfolie 160 zwischen den vorstehend beschriebenen Schichtaufbau und eine obere Pressplatte 162 und eine untere Pressplatte 164 der beheizbaren Laminatpresse 166 eingebracht.

Diese Schutzfolie 160 kann beispielsweise aus einem Fluorpolymermaterial, insbesondere aus Polytetrafluorethylen (PTFE), bestehen.

Die beheizbare Laminatpresse 166 wird auf einen Enddruck von beispielsweise höchstens ungefähr 10 mbar evakuiert.

Anschließend wird ein Startdruck P mittels der Pressplatten 162 und 164 auf die miteinander zu laminierenden Schichten der Bipolarplatte 122 aufgebracht.

Dann wird die Temperatur der zu laminierenden Schichten (mittels eines heißen Öls, welches die Pressplatten 162 und 164 durchströmt) von Raumtemperatur auf eine Temperatur von beispielsweise mindestens 250°C erhöht.

Bei dieser erhöhten Temperatur wird der Startdruck über eine Zeit von beispielsweise mindestens 5 Minuten gehaltne.

Anschließend wird der Anpressdruck vom Startdruck auf einen Enddruck P' von beispielsweise mindestens 200 N/cm² erhöht.

Der erhöhte Druck wird bei der erhöhten Temperatur während einer Druckhaltezeit von beispielsweise mindestens 5 Minuten gehalten.

Anschließend wird die Temperatur auf beispielsweise höchstens 100°C während einer Abkühlzeit von beispielsweise ungefähr 1,5 Stunden unter Beibehaltung des erhöhten Anpressdruckes von beispielsweise mindestes 200 N/cm² abgesenkt.

Nach Erreichen der gewünschten Abkühltemperatur von beispielsweise 100°C wird der Anpressdruck auf null abgesenkt, die Laminatpresse 166 belüftet und das aus dem Kohlenstofffaser-Vlies 138, den elektrisch leitfähigen Thermoplast-Compound-Folien 140 und den metallhaltigen Folien 136 gebildete Laminat entnommen, welches die Bipolarplatte 122 bildet.

Die Schutzfolien 160 verbinden sich hingegen nicht mit den metallhaltigen Folien 136 und bleiben daher in der Laminatpresse 166 zurück.

Durch das Evakuieren der Laminatpresse 166 vor dem Beaufschlagen des Schichtenstapels mit dem Startdruck werden Lufteinschlüsse in dem Schichtenstapel vermieden, so dass eine haltbare Laminierung im Wesentlichen vollständig ebener Schichten erzielt wird.

### Ausführungsbeispiel 2 für die Herstellung einer laminierten Bipolarplatte aus einem Kohlenstofffaser-Vlies, zwei Folien aus ETFE mit 20 Gewichtsprozent Ruß und zwei Blei/Zinn-Folien durch Laminieren:

In eine beheizbare Laminatpresse vom Typ LAM V 280 wird der folgende Schichtaufbau eingebracht:
- eine Pb-Sn-Folie 136 mit einer Stärke von 76 µm;
- eine Folie aus ETFE und 20 Gewichtsprozent Ruß mit einer Stärke von 100 µm;
- ein Kohlenstofffaser-Vlies vom Typ SIGRATEX SPC 7011/100 des Herstellers SGL Carbon AG, Wiesbaden, Deutschland, mit einer spezifischen Flächendichte von 30 g/m²;
- eine Folie aus ETFE und 20 Gewichtsprozent Ruß mit einer Stärke von 100 µm;
- eine Pb-Sn-Folie 136 mit einer Stärke von 76 µm.

Die vorstehend genannten Folien weisen eine Länge von beispielsweise ungefähr 1.200 mm und eine Breite von beispielsweise ungefähr 330 mm auf.

Zum Schutz der Oberfläche der Pb-Sn-Folien vor Beschädigung während des Laminierprozesses wird zwischen diese Folien und die Pressplatten 162, 164 der Laminatpresse 166 beidseitig jeweils eine Folie aus PTFE mit einer Stärke von 100 µm eingelegt.

Anschließend wird ein Laminierprozess mit den folgenden Einzelschritten durchgeführt:
- Evakuierung der beheizbaren Laminatpresse 166 während einer Minute auf einen Enddruck von 5 mbar;
- Aufbringen eines Startdruckes von 50 N/cm²;
- Erhöhung der Temperatur der zu laminierenden Schichten von Raumtemperatur auf 300°C während eines Erwärmungszeitraumes von zwei Stunden;
- Halten des Startdruckes von 50 N/cm² bei einer Temperatur von 300°C während einer Druckhaltezeit von 10 Minuten;
- Erhöhung des Anpressdruckes von dem Startdruck von 50 N/cm² auf einen Enddruck von 250 N/cm²;
- Halten des erhöhten Anpressdruckes von 250 N/cm² bei einer Temperatur von 300°C während einer Druckhaltezeit von 10 Minuten;
- Absenkung der Temperatur der zu laminierenden Schichten von 300°C auf 90°C während einer Abkühlzeit von 1,5 Stunden unter Beibehaltung eines Anpressdruckes von 250 N/cm²;
- Absenken des Anpressdrucks auf null nach dem Erreichen einer Temperatur von 90°C;
- Belüften der beheizbaren Laminatpresse 166;
- Entnehmen der Bipolarplatte 122 als Laminat aus dem Kohlenstofffaser-Vlies 138, den elektrisch leitfähigen ETFE-Folien mit 20 Gewichtsprozent Ruß 140 und den metallhaltigen Pb-Sn-Folien 136.

### (Ende des Ausführungsbeispiels 2)

Durch die Verstärkung der elektrisch leitfähigen Thermoplast-Compound-Folien 140 mit dem Kohlenstofffaser-Vlies 138 ergibt sich eine weitere Erhöhung der Leitfähigkeit der Bipolarplatte 122.

Das vorstehend beschriebene Verfahren der Trockenmischung von Thermoplast-Material und elektrisch leitfähigem Füllstoff, insbesondere Ruß, unter nachgeschalteter Herstellung der Thermoplast-Compound-Folie 140 mittels eines Schälverfahrens erlaubt jedoch die Herstellung dermaßen hochgefüllter Thermoplast-Compound-Folien 140, dass auf die Verwendung eines Kohlenstofffaser-Vlieses 138 zur Verbesserung der elektrischen Leitfähigkeit des Substrates 134 der Bipolarplatte 122 verzichtet werden kann.

In diesem Fall werden die beiden elektrisch leitfähigen Thermoplast-Compound-Folien 140 und das Kohlenstofffaser-Vlies 138 der in Fig. 1 schematisch dargestellten Ausführungsform eines Substrates 134 durch eine einzige elektrisch leitfähige Thermoplast-Compound-Folie 140 ersetzt.

Abgesehen von dieser Ersetzung wird das Laminierverfahren zur Herstellung der Bipolarplatte 122 ohne das Kohlenstofffaser-Vlies 138 genauso durchgeführt, wie dies vorstehend im Zusammenhang mit einem Kohlenstofffaser-Vlies-haltigen Substrat 134 beschrieben worden ist.

Insbesondere kann ein mehrteiliges Substrat 134 aus zwei ETFE-Folien mit 20 Gewichtsprozent Ruß mit einer Stärke von jeweils 100 µm und einem Kohlenstofffaser-Vlies mit einer spezifischen Flächendichte von 30 g/m² durch eine einzige ETFE-Folie mit 20 Gewichtsprozent Ruß mit einer Stärke von 100 µm bis 200 µm, vorzugsweise mit einer Stärke von 100 µm bis 150 µm, ersetzt werden.

Wie vorstehend ausgeführt, erfolgt das Aufbringen der Pb-Schicht auf beiden Seiten der Bipolarplatte 122 unter Verwendung einer Pb-Folie nach dem Laminierverfahren.

Dabei enthält die Legierung der Pb-Folie zur Stabilisierung gegen Oxidation einen geringen Anteil an Zinn (Sn), beispielsweise einen Anteil von bis zu maximal ungefähr 5 Gewichtsprozent Sn.

Zur Herstellung einer integrierten Bipolarzelle 106 aus einer in der vorstehend beschriebenen Weise hergestellten Bipolarplatte 122 und einem negativen Gitter 116 sowie einem positiven Gitter 120 wird wie folgt vorgegangen:
Zunächst werden ein negatives Gitter 116 und ein positives Gitter 120 jeweils durch zerspanende Bearbeitung einer Thermoplast-Compound-Folie hergestellt.

Diese Thermoplast-Compound-Folie, welche keine elektrische Leitfähigkeit aufweisen muss, kann in derselben Weise hergestellt werden, wie dies vorstehend für die elektrisch leitfähigen Thermoplast-Compound-Folien 140 der Bipolarplatte 122 beschrieben worden ist, jedoch vorzugsweise unter Ersetzung des elektrisch leitfähigen Füllstoffs durch einen nicht elektrisch leitfähigen Füllstoff.

Als Füllstoff für die Thermoplast-Compound-Folien, aus denen die Gitter 116 und 120 hergestellt werden, können insbesondere Glasfasern, vorzugsweise Kurzglasfasern vom Typ E-Glas, verwendet werden.

Alternativ hierzu können das negative Gitter 116 und das positive Gitter 120 auch durch zerspanende Bearbeitung einer Folie aus ungefülltem Thermoplast-Material hergestellt werden.

Die Gitter 116 und 120 können aus dem gleichen Thermoplast-Material wie die Thermoplast-Compound-Folien 140 der Bipolarplatte 122 hergestellt werden; wahlweise können jedoch auch andere geeignete Werkstoffe für die Gitter 116 und 120 eingesetzt werden.

Die Gitter 116 und 120 können insbesondere aus einem thermoplastischen Werkstoff, vorzugsweise aus Polypropylen (PP) und/oder aus Polycarbonat (PC), hergestellt werden.

### Ausführungsbeispiel 3 für die Herstellung einer nicht elektrisch leitfähigen Thermoplast-Compound-Folie für ein negatives Gitter oder ein positives Gitter mittels Heißverpressung:

In einen handelsüblichen Taumelmischer, der mit einem 50 Liter fassenden Mischgefäß bestückt ist, wird Folgendes eingebracht:
- 20 kg Fluon ETFE Z8820X des Herstellers Asahi Glass Chemicals, Hillhouse, Großbritannien, ein fein gemahlenes Pulver eines Fluorthermoplasten (Ethylentetrafluorethylen) mit einem Schmelzpunkt im Bereich von 250°C bis 280°C und einer typischen Partikelgrößenverteilung, die durch folgende Werte gekennzeichnet ist:
   x10 = 11µm;
   x50 = 36 µm;
   x90 = 68 µm;
   wobei x10 den Partikeldurchmesser bezeichnet, welcher von 10 Gewichtsprozent der Partikel unterschritten wird; wobei x50 den Partikeldurchmesser bezeichnet, der von 50 Gewichtsprozent der Partikel unterschritten wird; und wobei x90 den Partikeldurchmesser bezeichnet, welcher von 90 Gewichtsprozent der Partikel unterschritten wird.
- 5 kg Kurzglasfasern des Typs MF 7904, die von der Firma Lanxess Deutschland GmbH, Leverkusen, Deutschland, vertrieben werden; hierbei handelt es sich um Glasfasern vom Typ E-Glas mit einem nominellen Faserdurchmesser von 14 µm und einer mittleren Faserlänge von ungefähr 60 µm, wobei das Schüttgewicht der Kurzglasfasern ungefähr 0,9 g/ml beträgt.

Die Durchmischung der Komponenten ETFE und 20 Gewichtsprozent Kurzglasfasern erfolgt durch Drehen des Mischgefäßes über einen Zeitraum von 90 Minuten mit einer unteren Drehgeschwindigkeit von 75 U/min und einer oberen Drehgeschwindigkeit von 90 U/min, wobei jede Minute die Drehrichtung gewechselt wird.

Das so durch Trockenmischung erzeugte Thermoplast-Compound wird in eine Pressform 144 mit den folgenden Abmessungen eingebracht:
Innendurchmesser der hohlzylindrischen Außenwand 150: 250 mm Außendurchmesser des Dornes 148: 150 mm.

In diese Pressform 144 werden 15 kg der Mischung aus ETFE und 20 Gewichtsprozent Kurzglasfasern eingebracht und zunächst mit einem Stempeldruck von 140 bar über einen Zeitraum von 5 Minuten vorgepresst.

Danach wird die Pressform 144 mit der darin enthaltenen vorgepressten Mischung aus ETFE und 20 Gewichtsprozent Kurzglasfasern in einen Sinterofen 156 überführt.

Im Sinterofen 156 wird die Temperatur während eines Zeitraums von 2,3 Stunden auf 310°C erhöht und dann über einen Zeitraum von weiteren 24 Stunden gehalten.

Während der Verweildauer im Sinterofen 156 wird kein Druck auf die Polymermasse ausgeübt.

Danach wird die heiße Pressform 144 aus dem Sinterofen 156 entnommen und erneut in eine Presse überführt.

Unter Aufbringen eines Druckes von zunächst 50 bar während einer Haltezeit von einer Minute und anschließendem Erhöhen des Druckes auf 400 bar kühlt dann die Pressform 144 mit der Polymermasse innerhalb von 6 Stunden auf eine Außentemperatur von 60°C bis 70°C ab.

Nach dem vollständigen Erkalten wird die Polymermasse aus der Pressform 144 ausgedrückt und so ein hohlzylindrischer Formkörper 158 erhalten.

Der hohlzylindrische Formkörper 158 aus ETFE und 20 Gewichtsprozent Kurzglasfasern wird auf einen profilierten Dorn aufgeschoben und in eine Schälmaschine des Herstellers KELLER eingespannt.

Durch kontinuierliches Heranfahren eines Schälmessers an den sich mit dem Dorn drehenden hohlzylindrischen Formkörper 158 wird eine Folie aus ETFE und 20 Gewichtsprozent Kurzglasfasern vom Außenumfang des hohlzylindrischen Formkörpers 158 abgeschält.

Die Schälgeschwindigkeit für die Folienherstellung beträgt 11 m/min.

Die elektrisch nicht leitfähige Thermoplast-Compound-Folie aus ETFE mit 20 Gewichtsprozent Kurzglasfasern wird mit einer Stärke von 1,4 mm für das negative Gitter 116 (Anode) und mit einer Stärke von 1,2 mm für das positive Gitter 120 (Kathode) hergestellt.

### (Ende des Ausführungsbeispiels 3)

Aus in der vorstehend beschriebenen Weise durch ein Heißpressverfahren und ein Schälverfahren hergestellten Thermoplast-Compound-Folien werden negative Gitter 116 und positive Gitter 120 durch spanende Bearbeitung mit den Konturen gemäß den Fig. 4 und 5 hergestellt.

Dabei beträgt die Länge eines Gitters 116 oder 120 beispielsweise ungefähr 360 mm und die Breite eines Gitters 116 oder 120 beispielsweise ungefähr 325 mm.

Die im Wesentlichen quadratischen Durchtrittsöffnungen 124 der Gitter 116, 120 weisen beispielsweise eine Länge a von ungefähr 28 mm und eine Breite b von ebenfalls ungefähr 28 mm auf.

Die Breite s der Stege 168 zwischen den Durchtrittsöffnungen 124 beträgt beispielsweise ungefähr 3 mm.

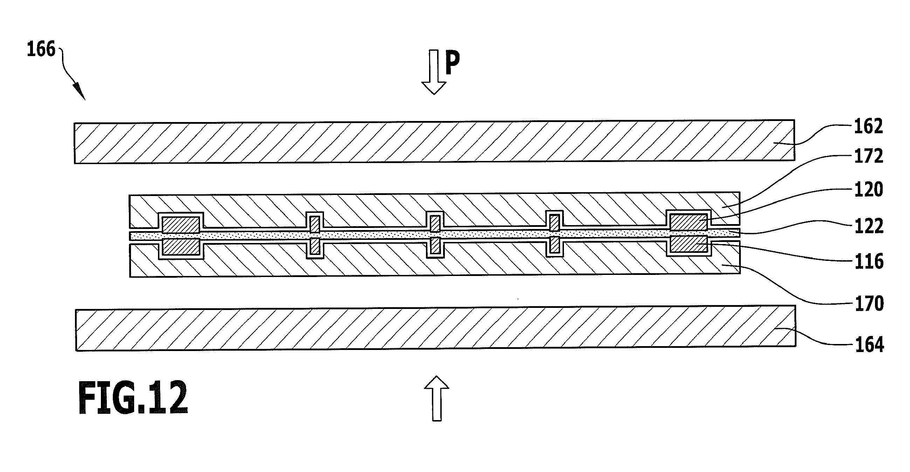

Zur Herstellung einer integrierten Bipolarzelle 106 aus einem negativen Gitter 116, einer Bipolarplatte 122 und einem positiven Gitter 120 wird wie folgt vorgegangen:
In eine beheizbare Laminatpresse 166 werden die folgenden Werkzeuge und Komponenten einer Bipolarzelle 106 (in der Reihenfolge von unten nach oben) eingebracht (siehe Fig. 12):
   - eine Negativform 170, die komplementär zu dem negativen Gitter 116 ausgebildet und beispielsweise durch zerspanende Bearbeitung eines Aluminium-Grundkörpers hergestellt ist;
   - ein negatives Gitter (Anodengitter) 116, das beispielsweise durch zerspanende Bearbeitung einer elektrisch nicht leitfähigen Thermoplast-Compound-Folie hergestellt ist;
   - eine laminierte Bipolarplatte 122, wie vorstehend im Zusammenhang mit Fig. 11 beschrieben;
   - ein positives Gitter (Kathodengitter) 120, hergestellt beispielsweise durch zerspanende Bearbeitung einer elektrisch nicht leitfähigen Thermoplast-Compound-Folie;
   - eine Negativform 172, die komplementär zu dem positiven Gitter 120 ausgebildet und beispielsweise durch zerspanende Bearbeitung eines Aluminium-Grundkörpers hergestellt ist.

Um später eine bessere Haftung der negativen Paste auf der Seite des negativen Gitters 116 und der positiven Paste auf der Seite des positiven Gitters 120 zu erreichen, können die außenliegenden Seiten der metallhaltigen Folien 136 der Bipolarplatte 122 vor oder nach dem Laminieren mit den Gittern 116 und 120 einer Oberflächenbehandlung unterzogen werden.

Beispielsweise kann vorgesehen sein, die Außenseiten der metallhaltigen Folien 136 durch "Sandstrahlen" unter Verwendung von Glasperlen, Aluminiumoxid oder Trockeneis (CO₂) zu reinigen und aufzurauen.

Nach dem Einbringen des vorstehend beschriebenen Schichtaufbaus in die beheizbare Laminatpresse 166 wird ein Laminierprozess mit den folgenden Einzelschritten unter Umgebungsdruck, d.h. ohne Evakuierung der Laminatpresse 166, ausgeführt:
- Aufbringen eines Startdruckes P von beispielsweise mindestens ungefähr 20 N/cm²;
- Erhöhung der Temperatur von Raumtemperatur auf eine Temperatur von beispielsweise mindestens ungefähr 250°C während einer Erwärmungszeit von beispielsweise mindestens ungefähr 1,5 Stunden;
- Halten des Druckes von beispielsweise mindestens ungefähr 20 N/cm² bei der erhöhten Temperatur von beispielsweise mindestens ungefähr 200°C während einer Druckhaltezeit von beispielsweise mindestens ungefähr 15 Minuten;
- Absenkung der Temperatur der zu laminierenden Schichten von der erhöhten Temperatur von beispielsweise mindestens ungefähr 200°C auf eine Temperatur von beispielsweise höchstens ungefähr 50°C während einer Abkühlzeit von beispielsweise ungefähr 1,3 Stunden, unter Beibehaltung des Anpressdruckes von beispielsweise mindestens ungefähr 20 N/cm²;
- Absenkung des Anpressdruckes auf null nach Erreichen der gewünschten Abkühltemperatur von beispielsweise 50°C;
- Entnehmen der Bipolarzelle 106 in Form eines Laminats aus der Bipolarplatte 122 und den Gittern 116 und 120.

### Ausführungsbeispiel 4 für die Herstellung einer Bipolarzelle aus einer Bipolarplatte, einem negativen Gitter und einem positiven Gitter durch ein Laminierverfahren:

In eine beheizbare Laminatpresse 166 vom Typ LAM V 280 werden die folgenden Werkzeuge und Komponenten einer zu laminierenden Bipolarzelle (in der Reihenfolge von unten nach oben) eingebracht:
- eine Negativform 170, die komplementär zu dem negativen Gitter 116 ausgebildet und durch zerspanende Bearbeitung eines Aluminium-Grundkörpers hergestellt ist;
- ein negatives Gitter 116 aus ETFE und 20 Gewichtsprozent Kurzglasfasern, das durch zerspanende Bearbeitung einer Folie aus ETFE und 20 Gewichtsprozent Kurzglasfasern mit der Dicke 1,4 mm hergestellt ist;
- eine laminierte Bipolarplatte 122, wie im vorstehenden Ausführungsbeispiel 2 beschrieben;
- ein positives Gitter 120 aus ETFE und 20 Gewichtsprozent Kurzglasfasern, das durch zerspanende Bearbeitung einer Folie aus ETFE und 20 Gewichtsprozent Kurzglasfasern mit der Dicke 1,2 mm hergestellt ist;
- eine Negativform 172 für das positive Gitter 120, die komplementär zu dem positiven Gitter 120 ausgebildet und durch zerspanende Bearbeitung eines Aluminium-Grundkörpers hergestellt ist.

Nach Einbringen des vorstehend beschriebenen Schichtaufbaus zwischen die Pressplatten 162 und 164 der Laminatpresse 166 werden die folgenden Einzelschritte unter Umgebungsdruck ausgeführt:
- Aufbringen eines Startdruckes von 35 N/cm²;
- Erhöhung der Temperatur von Raumtemperatur auf 250°C während einer Erwärmungszeit von ungefähr 1,8 Stunden;
- Halten des Druckes von 35 N/cm² bei einer Temperatur von 250°C während einer Druckhaltezeit von ungefähr 20 Minuten;
- Absenkung der Temperatur von 250°C auf 40°C während einer Abkühlzeit von ungefähr 1,3 Stunden unter Beibehaltung des Anpressdruckes von 35 N/cm²;
- Absenkung des Anpressdrucks auf null nach Erreichen der gewünschten Abkühltemperatur von 40°C;
- Entnehmen der als Laminat der Bipolarplatte 122, des negativen Gitters 116 und des positiven Gitters 120 hergestellten Bipolarzelle 106.

### (Ende des Ausführungsbeispiels 4)

Alternativ zu dem vorstehend beschriebenen Laminierverfahren können das negative Gitter 116 und das positive Gitter 120 auch durch ein Spritzgießverfahren oder durch Transfer-Moulding direkt aus der Schmelze auf die Bipolarplatte 122 aufgebracht werden.

Die Abstandshalter 108 der Bipolar-Bleisäurebatterie 100 können aus einer Folie aus einem thermoplastischen Fluorpolymermaterial oder aus Polytetrafluorethylen (PTFE) durch zerspanende Bearbeitung mit der in den Fig. 6 und 7 dargestellten Außenkontur hergestellt werden.

Die negative Platte 114 der negativen Endzelle 102 der Bipolar-Bleisäurebatterie 100 umfasst dasselbe Substrat 134 wie die Bipolarplatte 122, das jedoch nur einseitig, nämlich auf der dem negativen Gitter 116 zugewandten Seite der negativen Platte 114, mit einer metallhaltigen Folie, beispielsweise einer Blei/Zinn-Folie, versehen ist.

Die negative Platte 114 kann aus dem Substrat und aus der metallhaltigen Folie durch ein dem Laminierverfahren der Bipolarplatte 122 entsprechendes Laminierverfahren hergestellt werden.

Die positive Platte 118 der positiven Endzelle 104 der Bipolar-Bleisäurebatterie 100 umfasst dasselbe Substrat 134 wie die Bipolarplatte 122, ist aber nur einseitig, nämlich auf ihrer dem positiven Gitter 120 zugewandten Seite, mit einer metallhaltigen Folie, beispielsweise einer Blei/Zinn-Folie, versehen.

Die positive Platte 118 kann durch ein dem Laminierverfahren zur Herstellung der Bipolarplatte 122 entsprechendes Laminierverfahren aus dem Substrat und der metallhaltigen Folie hergestellt werden.

Ferner kann die negative Platte 114 der negativen Endzelle 102 durch ein dem Laminierverfahren zur Herstellung der integrierten Bipolarzelle 106 entsprechendes Laminierverfahren mit dem negativen Gitter 116 verbunden werden.

Ebenso kann die positive Platte 118 der positiven Endzelle 104 durch ein dem Laminierverfahren zur Herstellung der integrierten Bipolarzelle 106 entsprechendes Laminierverfahren mit dem positiven Gitter 120 verbunden werden.

Vor dem Zusammenbau der Bipolar-Bleisäurebatterie 100 werden die positiven Gitter 120 der Bipolarzellen 106 und der positiven Endzelle 104 mit positiver Paste befüllt.

Ebenso werden die negativen Gitter 116 der Bipolarzellen 106 und der negativen Endzelle 102 mit negativer Paste befüllt.

In die Abstandshalter 108 werden Separatoren in Form von Glasfasermatten eingelegt.
Dabei kann vorgesehen sein, dass die Glasfasermatten im druckfreien Zustand eine Dicke aufweisen, welche die Dicke der Abstandshalter 108 übersteigt, und dass die Glasfasermatten beim Zusammenbau der Bipolar-Bleisäurebatterie 100 in deren Längsrichtung komprimiert werden.

Nachdem die gewünschte Anzahl von Bipolarzellen 106 und von Abstandshaltern 108 mit Glasfasermatten sowie die negative Endzelle 102 und die positive Endzelle 104 in der in den Fig. 1 bis 3 dargestellten Reihenfolge zusammengestellt worden sind, werden dieselben unter Anwendung eines Drucks in der Längsrichtung 174 der Bipolar-Bleisäurebatterie 100 gegeneinander gepresst und durch geeignete Verspannungseinrichtungen in dieser Position gegeneinander verspannt.

Anschließend kann der Elektrolyt durch (nicht dargestellte) Befüllungsöffnungen in den Abstandshaltern 108 in die als Separatoren dienenden Glasfasermatten eingefüllt werden.

Damit ist die Bipolar-Bleisäurebatterie 100 betriebsbereit und kann aufgeladen werden.

Wenn die Abstandshalter 108 und die negativen Gitter 116 sowie die positiven Gitter 120 aus einem Thermoplastmaterial enthaltenden Material gebildet sind, so können in der Längsrichtung 174 der Bipolar-Bleisäurebatterie 100 aufeinanderfolgende Abstandshalter 108 und Gitter 116, 120 durch Verschweißung zu einem Zellenstapel zusammengefügt werden.

In diesem Fall können die Dichtelemente 128 zwischen den Abstandshaltern 108 und den denselben benachbarten Gittern 116 bzw. 120 entfallen.

Das vorstehend beschriebene Verfahren zur Herstellung einer Bipolar-Bleisäurebatterie 100 ist besonders umweltfreundlich und sorgt für eine besonders hohe chemische Beständigkeit der Bleischichten in den metallhaltigen Folien 136, insbesondere auf der den negativen Gittern (Anodengittern) 116 zugewandten Seite der Bleischichten.

Der bipolare Aufbau der Bipolar-Bleisäurebatterie 100 verringert den Bedarf an Blei bei gleicher Leistung und führt somit zu einem besonders umweltfreundlichen Endprodukt.

## Patentansprüche

1. Verfahren zur Herstellung einer Bipolarzelle (106) für eine bipolare Batterie (100), umfassend folgende Verfahrensschritte:
- Bereitstellen einer Bipolarplatte (122);
- Bereitstellen mindestens eines Gitters (116, 120);
- Laminieren des mindestens einen Gitters (116, 120) und der Bipolarplatte (122) oder Aufbringen des mindestens einen Gitters (116, 120) auf die Bipolarplatte (122) durch ein Spritzgießverfahren oder durch Transfer-Moulding.

2. Verfahren nach Anspruch 1, **dadurch gekennzeichnet, dass** zwei Gitter (116, 120) bereitgestellt und mit einander gegenüberliegenden Seiten der Bipolarplatte (122) laminiert werden.

3. Verfahren nach einem der Ansprüche 1 oder 2, **dadurch gekennzeichnet, dass** mindestens ein Gitter (116, 120) durch zerspanende Bearbeitung einer Folie hergestellt wird.

4. Verfahren nach Anspruch 3, **dadurch gekennzeichnet, dass** die Folie durch Abschälen von einem Block (158) eines Ausgangsmaterials hergestellt wird.

5. Verfahren nach Anspruch 4, **dadurch gekennzeichnet, dass** der Block (158) durch ein Heißpressverfahren aus einem thermoplasthaltigen Material hergestellt wird.

6. Verfahren nach einem der Ansprüche 1 bis 5, **dadurch gekennzeichnet, dass** mindestens ein Gitter (116, 120) ein Thermoplast-Material, insbesondere Polypropylen (PP) und/oder Polycarbonat (PC), enthält.

7. Verfahren nach Anspruch 6, **dadurch gekennzeichnet, dass** mindestens ein Gitter (116, 120) ein Thermoplast-Compound enthält, das mindestens ein Thermoplast-Material, insbesondere Polypropylen (PP) und/oder Polycarbonat (PC), und mindestens einen Füllstoff enthält.

8. Verfahren nach Anspruch 7, **dadurch gekennzeichnet, dass** mindestens ein Gitter (116, 120) als Füllstoff Glasfasern enthält.

9. Verfahren nach einem der Ansprüche 1 bis 8, **dadurch gekennzeichnet, dass** das Laminieren in einer beheizten Laminatpresse (166) erfolgt.

10. Verfahren nach einem der Ansprüche 1 bis 9, **dadurch gekennzeichnet, dass** beim Laminieren mindestens ein Gitter (116, 120) in einer komplementär zu dem Gitter (116, 120) ausgebildeten Negativform (170, 172) aufgenommen ist.

11. Verfahren nach Anspruch 10, **dadurch gekennzeichnet, dass** beim Laminieren zwei auf einander entgegengesetzten Seiten der Bipolarplatte (122) angeordnete Gitter (116, 120) in jeweils einer komplementär zu dem jeweiligen Gitter (116, 120) ausgebildeten Negativform (170, 172) aufgenommen sind.

12. Verfahren nach einem der Ansprüche 1 bis 11, **dadurch gekennzeichnet, dass** das Laminieren unter einem während des Laminiervorgangs im Wesentlichen konstanten Anpressdruck durchgeführt wird.

13. Verfahren nach einem der Ansprüche 1 bis 12, **dadurch gekennzeichnet, dass** die Bipolarplatte (122) mindestens ein Substrat (134) und mindestens eine metallhaltige Folie (136) umfasst, die bereits vor dem Laminieren des mindestens einen Gitters (116, 120) und der Bipolarplatte (122) miteinander laminiert werden.

14. Verfahren nach einem der Ansprüche 1 bis 13, **dadurch gekennzeichnet, dass** das Laminieren des mindestens einen Gitters (116, 120) und der Bipolarplatte zumindest zeitweise bei einer Temperatur von mindestens ungefähr 100°C erfolgt.

15. Bipolarzelle für eine bipolare Batterie (100), umfassend eine Bipolarplatte (122) und mindestens ein Gitter (116, 120), das mit der Bipolarplatte (122) laminiert ist oder durch ein Spritzgießverfahren oder Transfer-Moulding auf die Bipolarplatte (122) aufgebracht ist.
